# EUROPEAN PATENT APPLICATION

(11) **EP 4 518 370 A1**
(43) Date of publication of application: **05.03.2025**
(21) Application number: 24194920.5
(22) Date of filing: 16.08.2024
(51) Int. Cl.: H04W 4/38, G06K 19/07, H04W 4/70, H04W 52/02, H04W 52/36

(54) **METHOD, APPARATUS AND COMPUTER PROGRAM FOR ACTIVATING A DEVICE BASED ON POWER LEVEL**

(30) Priority: 01.09.2023 GB 202313374
(71) Applicant: Nokia Technologies Oy, 02610 Espoo (FI)
(72) Inventor: HARREBEK, Johannes, Aalborg (DK); KIILERICH PRATAS, Nuno Manuel, Aalborg (DK); SVENDSEN, Simon, Aalborg (DK); VEJLGAARD, Benny, Gistrup (DK); BARBU, Oana-Elena, Aalborg (DK)
(74) Representative: Nokia EPO representatives

(57) **Abstract**

An apparatus comprising: means for receiving an activation signal; means for transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

## Description

### FIELD

The present application relates to an apparatus, method and computer program. In particular, but not exclusively, the present application relates to Internet of Thing (IoT) devices. Some examples relate to Ambient loT (A-loT) devices.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect there is provided an apparatus comprising: means for configuring a first device with one or more power levels for transmitting an activation signal to at least one tag; means for sending, to a second device, the one or more power levels and a tag identifier for each of the at least one tag; means for receiving, from the second device, an indication of which tag identifier provides a response to the second device at each power level of the one or more power levels of the activation signal from the first device; means for creating a map comprising an indication of which tag identifier provides a response to the second device at each power level of the one or more power levels of the activation signal from the first device.

According to some examples, each of the at least one tag provides a response to the second device when the activation signal is received from the first device with a respective minimum power level at the respective tag.

According to some examples, the apparatus comprises: means for sending, to the first device, a list of tag identifiers and information defining an order in which the first device is to send an activation signal and a capability request to each tag identified in the list of tag identifiers; means for sending, to the second device, the list of tag identifiers and the information defining the order in which the first device is to send the activation signal and the capability request to each tag identified in the list of tag identifiers; means for receiving, from the second device and after the first device sends the activation signal and the capability request to each tag identified in the list of tag identifiers, capability information for each tag identified in the list of tag identifiers.

According to some examples, the list of tag identifiers identifies a first tag, and wherein the capability information for the first tag indicates a first capability that: the first tag will respond once in a first state and while the activation signal is received at the first tag at a power level above a power level threshold; and when the power level of the activation signal at the first tag drops from above the power level threshold to below the power threshold level, the tag will return to the first state.

According to some examples, the list of tag identifiers identifies a second tag, and wherein the capability information for the second tag indicates a second capability that: the second tag will respond while the activation signal is received at the second tag at a power level above a second power level threshold and below a third power level threshold.

According to some examples, the tags identified in the list of tag identifiers comprise the at least one tag.

According to some examples, the third power level threshold can be configured via the activation signal from the first device.

According to some examples, the at least one of the first capability of the first tag and the second capability of the second tag can be enabled and disabled using the activation signal from the first device.

According to some examples, the first tag comprises the second tag.

According to some examples, the apparatus comprises means for determining, based on the map, one or more tags of the at least one tag that will provide a response at a first power level of the activation signal; means for configuring the first device to address the one or more tags using the first power level.

According to some examples, the apparatus comprises: means for determining, based on the map, a group of tags that will provide a response at a second power level of the activation signal, wherein the at least one tag comprises the group of tags; means for configuring the first device to address a specific tag of the group of tags using the second power level and a tag identifier of the specific tag.

According to some examples, the apparatus comprises: means for determining, based on the map, a group of tags that will provide a response at a third power level of the activation signal, wherein the at least one tag comprises the group of tags; means for configuring the first device to address the group of tags using the third power level and such that each tag in the group of tags responds to the second device after a time period of random delay.

According to some examples, the first device comprises an activator.

According to some examples, the second device comprises a reader.

According to some examples, the first device and the second device are collocated.

According to some examples, the first device and the second device are at different locations.

According to a second aspect, there is provided an apparatus comprising at least one processor and at least one memory storing instructions that, when executed by the at least one processor, cause the apparatus at least to perform: configuring a first device with one or more power levels for transmitting an activation signal to at least one tag; sending, to a second device, the one or more power levels and a tag identifier for each of the at least one tag; receiving, from the second device, an indication of which tag identifier provides a response to the second device at each power level of the one or more power levels of the activation signal from the first device; creating a map comprising an indication of which tag identifier provides a response to the second device at each power level of the one or more power levels of the activation signal from the first device.

According to some examples, each of the at least one tag provides a response to the second device when the activation signal is received from the first device with a respective minimum power level at the respective tag.

According to some examples, the at least one processor and at least one memory storing instructions cause, when executed by the at least one processor, the apparatus at least to perform: sending, to the first device, a list of tag identifiers and information defining an order in which the first device is to send an activation signal and a capability request to each tag identified in the list of tag identifiers; for sending, to the second device, the list of tag identifiers and the information defining the order in which the first device is to send the activation signal and the capability request to each tag identified in the list of tag identifiers; receiving, from the second device and after the first device sends the activation signal and the capability request to each tag identified in the list of tag identifiers, capability information for each tag identified in the list of tag identifiers.

According to some examples, the list of tag identifiers identifies a first tag, and the capability information for the first tag indicates a first capability that: the first tag will respond once in a first state and while the activation signal is received at the first tag at a power level above a power level threshold; and when the power level of the activation signal at the first tag drops from above the power level threshold to below the power threshold level, the tag will return to the first state.

According to some examples, the list of tag identifiers identifies a second tag, and the capability information for the second tag indicates a second capability that: the second tag will respond while the activation signal is received at the second tag at a power level above a second power level threshold and below a third power level threshold.

According to some examples, the tags identified in the list of tag identifiers comprise the at least one tag.

According to some examples, the third power level threshold can be configured via the activation signal from the first device.

According to some examples, the at least one of the first capability of the first tag and the second capability of the second tag can be enabled and disabled using the activation signal from the first device.

According to some examples, the first tag comprises the second tag.

According to some examples, the at least one processor and at least one memory storing instructions cause, when executed by the at least one processor, the apparatus at least to perform: determining, based on the map, one or more tags of the at least one tag that will provide a response at a first power level of the activation signal; configuring the first device to address the one or more tags using the first power level.

According to some examples, the at least one processor and at least one memory storing instructions cause, when executed by the at least one processor, the apparatus at least to perform: determining, based on the map, a group of tags that will provide a response at a second power level of the activation signal, wherein the at least one tag comprises the group of tags; configuring the first device to address a specific tag of the group of tags using the second power level and a tag identifier of the specific tag.

According to some examples, the at least one processor and at least one memory storing instructions cause, when executed by the at least one processor, the apparatus at least to perform: determining, based on the map, a group of tags that will provide a response at a third power level of the activation signal, wherein the at least one tag comprises the group of tags; means for configuring the first device to address the group of tags using the third power level and such that each tag in the group of tags responds to the second device after a time period of random delay.

According to some examples, the first device comprises an activator.

According to some examples, the second device comprises a reader.

According to some examples, the first device and the second device are collocated.

According to some examples, the first device and the second device are at different locations.

According to a third aspect there is provided a method comprising: configuring a first device with one or more power levels for transmitting an activation signal to at least one tag; sending, to a second device, the one or more power levels and a tag identifier for each of the at least one tag; receiving, from the second device, an indication of which tag identifier provides a response to the second device at each power level of the one or more power levels of the activation signal from the first device; creating a map comprising an indication of which tag identifier provides a response to the second device at each power level of the one or more power levels of the activation signal from the first device.

According to some examples, each of the at least one tag provides a response to the second device when the activation signal is received from the first device with a respective minimum power level at the respective tag.

According to some examples, method comprises: sending, to the first device, a list of tag identifiers and information defining an order in which the first device is to send an activation signal and a capability request to each tag identified in the list of tag identifiers; for sending, to the second device, the list of tag identifiers and the information defining the order in which the first device is to send the activation signal and the capability request to each tag identified in the list of tag identifiers; receiving, from the second device and after the first device sends the activation signal and the capability request to each tag identified in the list of tag identifiers, capability information for each tag identified in the list of tag identifiers.

According to some examples, the list of tag identifiers identifies a first tag, and the capability information for the first tag indicates a first capability that: the first tag will respond once in a first state and while the activation signal is received at the first tag at a power level above a power level threshold; and when the power level of the activation signal at the first tag drops from above the power level threshold to below the power threshold level, the tag will return to the first state.

According to some examples, the list of tag identifiers identifies a second tag, and the capability information for the second tag indicates a second capability that: the second tag will respond while the activation signal is received at the second tag at a power level above a second power level threshold and below a third power level threshold.

According to some examples, the tags identified in the list of tag identifiers comprise the at least one tag.

According to some examples, the third power level threshold can be configured via the activation signal from the first device.

According to some examples, the at least one of the first capability of the first tag and the second capability of the second tag can be enabled and disabled using the activation signal from the first device.

According to some examples, the first tag comprises the second tag.

According to some examples, method comprises: determining, based on the map, one or more tags of the at least one tag that will provide a response at a first power level of the activation signal; configuring the first device to address the one or more tags using the first power level.

According to some examples, method comprises: determining, based on the map, a group of tags that will provide a response at a second power level of the activation signal, wherein the at least one tag comprises the group of tags; configuring the first device to address a specific tag of the group of tags using the second power level and a tag identifier of the specific tag.

According to some examples, method comprises: determining, based on the map, a group of tags that will provide a response at a third power level of the activation signal, wherein the at least one tag comprises the group of tags; means for configuring the first device to address the group of tags using the third power level and such that each tag in the group of tags responds to the second device after a time period of random delay.

According to some examples, the first device comprises an activator.

According to some examples, the second device comprises a reader.

According to some examples, the first device and the second device are collocated.

According to some examples, the first device and the second device are at different locations.

According to a fourth aspect there is provided a computer readable medium comprising instructions which, when executed by an apparatus, cause the apparatus to perform at least the following: configuring a first device with one or more power levels for transmitting an activation signal to at least one tag; sending, to a second device, the one or more power levels and a tag identifier for each of the at least one tag; receiving, from the second device, an indication of which tag identifier provides a response to the second device at each power level of the one or more power levels of the activation signal from the first device; creating a map comprising an indication of which tag identifier provides a response to the second device at each power level of the one or more power levels of the activation signal from the first device.

According to a fifth aspect, there is provided a non-transitory computer readable medium comprising program instructions that, when executed by an apparatus, cause the apparatus to perform at least the following: configuring a first device with one or more power levels for transmitting an activation signal to at least one tag; sending, to a second device, the one or more power levels and a tag identifier for each of the at least one tag; receiving, from the second device, an indication of which tag identifier provides a response to the second device at each power level of the one or more power levels of the activation signal from the first device; creating a map comprising an indication of which tag identifier provides a response to the second device at each power level of the one or more power levels of the activation signal from the first device.

According to a sixth aspect there is provided an apparatus comprising: means for means for receiving, from a network entity, a configuration with one or more power levels for the apparatus to transmit an activation signal to at least one tag; means for transmitting the activation signal to the at least one tag with the one or more power levels.

According to some examples, the apparatus comprises: means for receiving, from the network entity, a list of tag identifiers and information defining an order in which the apparatus is to send an activation signal and a capability request to each tag identified in the list of tag identifiers; means for sending the activation signal and the capability request to each tag identified in the list of tag identifiers according to the information defining the order.

According to some examples, the tags identified in the list of tag identifiers comprise the at least one tag.

According to some examples, the first tag comprises the second tag.

According to some examples, the apparatus comprises: means for receiving a first configuration from the network entity for the apparatus to address the one or more tags using a first power level of the activation signal; means for transmitting the activation signal to the one or more tags using the first configuration.

According to some examples, the apparatus comprises: means for receiving a second configuration from the network entity for the apparatus to address a group of tags using a second power level of the activation signal, wherein the at least one tag comprises the group of tags; means for transmitting the activation signal to address a specific tag of the group of tags using the second power level and a tag identifier of the specific tag.

According to some examples, the apparatus comprises: means for receiving a third configuration from the network entity for the apparatus to address a group of tags using a third power level of the activation signal, wherein the at least one tag comprises the group of tags; means for configuring the first device to address the group of tags using the third power level and such that each tag in the group of tags responds to the activation signal after a time period of random delay.

According to some examples, the apparatus comprises: means for transmitting an activation signal at a maximum power of the apparatus to enable or disable a capability of the at least one tag.

According to some examples, the apparatus comprises an activator.

According to some examples, the network entity comprises an SCU.

According to a seventh aspect there is provided an apparatus comprising at least one processor and at least one memory storing instructions that, when executed by the at least one processor, cause the apparatus at least to perform: receiving, from a network entity, a configuration with one or more power levels for the apparatus to transmit an activation signal to at least one tag; transmitting the activation signal to the at least one tag with the one or more power levels.

According to some examples, the at least one processor and at least one memory storing instructions cause, when executed by the at least one processor, the apparatus at least to perform: receiving, from the network entity, a list of tag identifiers and information defining an order in which the apparatus is to send an activation signal and a capability request to each tag identified in the list of tag identifiers; sending the activation signal and the capability request to each tag identified in the list of tag identifiers according to the information defining the order.

According to some examples, the tags identified in the list of tag identifiers comprise the at least one tag.

According to some examples, the first tag comprises the second tag.

According to some examples, the at least one processor and at least one memory storing instructions cause, when executed by the at least one processor, the apparatus at least to perform: receiving a first configuration from the network entity for the apparatus to address the one or more tags using a first power level of the activation signal; transmitting the activation signal to the one or more tags using the first configuration.

According to some examples, the at least one processor and at least one memory storing instructions cause, when executed by the at least one processor, the apparatus at least to perform: receiving a second configuration from the network entity for the apparatus to address a group of tags using a second power level of the activation signal, wherein the at least one tag comprises the group of tags; transmitting the activation signal to address a specific tag of the group of tags using the second power level and a tag identifier of the specific tag.

According to some examples, the at least one processor and at least one memory storing instructions cause, when executed by the at least one processor, the apparatus at least to perform: receiving a third configuration from the network entity for the apparatus to address a group of tags using a third power level of the activation signal, wherein the at least one tag comprises the group of tags; configuring the first device to address the group of tags using the third power level and such that each tag in the group of tags responds to the activation signal after a time period of random delay.

According to some examples, the at least one processor and at least one memory storing instructions cause, when executed by the at least one processor, the apparatus at least to perform: transmitting an activation signal at a maximum power of the apparatus to enable or disable a capability of the at least one tag.

According to some examples, the apparatus comprises an activator.

According to some examples, the network entity comprises an SCU.

According to an eighth aspect there is provided a method comprising: receiving, from a network entity, a configuration with one or more power levels for the apparatus to transmit an activation signal to at least one tag; transmitting the activation signal to the at least one tag with the one or more power levels.

According to some examples, the method comprises: receiving, from the network entity, a list of tag identifiers and information defining an order in which the apparatus is to send an activation signal and a capability request to each tag identified in the list of tag identifiers; sending the activation signal and the capability request to each tag identified in the list of tag identifiers according to the information defining the order.

According to some examples, the tags identified in the list of tag identifiers comprise the at least one tag.

According to some examples, the first tag comprises the second tag.

According to some examples, the method comprises: receiving a first configuration from the network entity for the apparatus to address the one or more tags using a first power level of the activation signal; transmitting the activation signal to the one or more tags using the first configuration.

According to some examples, the method comprises: receiving a second configuration from the network entity for the apparatus to address a group of tags using a second power level of the activation signal, wherein the at least one tag comprises the group of tags; transmitting the activation signal to address a specific tag of the group of tags using the second power level and a tag identifier of the specific tag.

According to some examples, the method comprises: receiving a third configuration from the network entity for the apparatus to address a group of tags using a third power level of the activation signal, wherein the at least one tag comprises the group of tags;
configuring the first device to address the group of tags using the third power level and such that each tag in the group of tags responds to the activation signal after a time period of random delay.

According to some examples, the method comprises: transmitting an activation signal at a maximum power of the apparatus to enable or disable a capability of the at least one tag.

According to some examples, the apparatus comprises an activator.

According to some examples, the network entity comprises an SCU

According to a ninth aspect there is provided a computer readable medium comprising instructions which, when executed by an apparatus, cause the apparatus to perform at least the following: receiving, from a network entity, a configuration with one or more power levels for the apparatus to transmit an activation signal to at least one tag; transmitting the activation signal to the at least one tag with the one or more power levels.

According to a tenth aspect there is provided a non-transitory computer readable medium comprising program instructions that, when executed by an apparatus, cause the apparatus to perform at least the following: receiving, from a network entity, a configuration with one or more power levels for the apparatus to transmit an activation signal to at least one tag; transmitting the activation signal to the at least one tag with the one or more power levels.

According to an eleventh aspect there is provided an apparatus comprising means for: receiving, from a network entity, one or more power levels and a tag identifier for each of at least one tag; means for receiving, when a first device transmits an activation signal at each of the one more power levels, a response including a tag identifier from each of one or more tags of the at least one tag; means for sending, to the network entity, an indication of which tag identifier provides a response to the apparatus at each power level of the one or more power levels of the activation signal from the first device.

According to some examples, the apparatus comprises: means for receiving, from the network entity, a list of tag identifiers and information defining the order in which the first device is to send the activation signal and a capability request to each tag identified in the list of tag identifiers; means for receiving, when the first device transmits the activation signal and the capability request at each of the one more power levels, a response including a tag identifier and capability information from each tag identified in the list of tag identifiers; means for sending, to the network entity, capability information for each tag identified in the list of tag identifiers.

According to some examples, the first device comprises an activator.

According to some examples, the apparatus comprises a reader.

According to a twelfth aspect there is provided an apparatus comprising at least one processor and at least one memory storing instructions that, when executed by the at least one processor, cause the apparatus at least to perform: receiving, when a first device transmits an activation signal at each of the one more power levels, a response including a tag identifier from each of one or more tags of the at least one tag; sending, to the network entity, an indication of which tag identifier provides a response to the apparatus at each power level of the one or more power levels of the activation signal from the first device.

According to some examples, the at least one processor and at least one memory storing instructions cause, when executed by the at least one processor, the apparatus at least to perform: receiving, from the network entity, a list of tag identifiers and information defining the order in which the first device is to send the activation signal and a capability request to each tag identified in the list of tag identifiers; receiving, when the first device transmits the activation signal and the capability request at each of the one more power levels, a response including a tag identifier and capability information from each tag identified in the list of tag identifiers; sending, to the network entity, capability information for each tag identified in the list of tag identifiers.

According to some examples, the first device comprises an activator.

According to some examples, the apparatus comprises a reader.

According to a thirteenth aspect there is provided a method comprising: receiving, when a first device transmits an activation signal at each of the one more power levels, a response including a tag identifier from each of one or more tags of the at least one tag; sending, to the network entity, an indication of which tag identifier provides a response to the apparatus at each power level of the one or more power levels of the activation signal from the first device.

According to some examples, the method comprises: receiving, from the network entity, a list of tag identifiers and information defining the order in which the first device is to send the activation signal and a capability request to each tag identified in the list of tag identifiers; receiving, when the first device transmits the activation signal and the capability request at each of the one more power levels, a response including a tag identifier and capability information from each tag identified in the list of tag identifiers; sending, to the network entity, capability information for each tag identified in the list of tag identifiers.

According to some examples, the first device comprises an activator.

According to some examples, the apparatus comprises a reader.

According to a fourteenth aspect there is provided a computer readable medium comprising instructions which, when executed by an apparatus, cause the apparatus to perform at least the following: receiving, when a first device transmits an activation signal at each of the one more power levels, a response including a tag identifier from each of one or more tags of the at least one tag; sending, to the network entity, an indication of which tag identifier provides a response to the apparatus at each power level of the one or more power levels of the activation signal from the first device.

According to a fifteenth aspect there is provided a non-transitory computer readable medium comprising program instructions that, when executed by an apparatus, cause the apparatus to perform at least the following: receiving, when a first device transmits an activation signal at each of the one more power levels, a response including a tag identifier from each of one or more tags of the at least one tag; sending, to the network entity, an indication of which tag identifier provides a response to the apparatus at each power level of the one or more power levels of the activation signal from the first device.

According to a sixteenth aspect there is provided an apparatus comprising: means for receiving an activation signal; means for transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to some examples, the apparatus comprises: means for receiving a second activation signal with an instruction to enable or disable at least one of condition i) and condition ii).

According to some examples, the apparatus comprises: means for receiving a third activation signal with a request to report whether the apparatus sends the response according to condition i) and/or condition ii); means for sending, in response to the request, an indication that the apparatus sends a response according to at least one of condition i) and/or condition ii).

According to some examples, the apparatus comprises: means for receiving a fourth activation signal with a request to change the second threshold in an operation according to condition ii); means for changing the second threshold according to the request.

According to some examples, the apparatus comprises means for determining that the power level of the activation has dropped from above the first power threshold level to below the first power threshold level; means for configuring, in response to the determination, the apparatus in a first state where the response is transmitted once in response to the activation signal being received at a third power level above the first threshold.

According to some examples, a power level of the activation signal is increased according to a power ramp profile.

According to some examples, the activation signal is received from a first device and the response is transmitted to a second device.

According to some examples the first device and second device are collocated.

According to some examples, the first device and second device are at different locations.

According to some examples, the first device comprises the second device.

According to some examples, the apparatus comprises a tag.

According to some examples, the apparatus comprises a passive loT device.

According to a seventeenth aspect there is provided an apparatus comprising at least one processor and at least one memory storing instructions that, when executed by the at least one processor, cause the apparatus at least to perform: receiving an activation signal; transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to some examples, the at least one processor and at least one memory storing instructions cause, when executed by the at least one processor, the apparatus at least to perform: receiving a second activation signal with an instruction to enable or disable at least one of condition i) and condition ii).

According to some examples, the at least one processor and at least one memory storing instructions cause, when executed by the at least one processor, the apparatus at least to perform: receiving a third activation signal with a request to report whether the apparatus sends the response according to condition i) and/or condition ii); sending, in response to the request, an indication that the apparatus sends a response according to at least one of condition i) and/or condition ii).

According to some examples, the at least one processor and at least one memory storing instructions cause, when executed by the at least one processor, the apparatus at least to perform: receiving a fourth activation signal with a request to change the second threshold in an operation according to condition ii); changing the second threshold according to the request.

According to some examples, the at least one processor and at least one memory storing instructions cause, when executed by the at least one processor, the apparatus at least to perform: determining that the power level of the activation has dropped from above the first power threshold level to below the first power threshold level; configuring, in response to the determination, the apparatus in a first state where the response is transmitted once in response to the activation signal being received at a third power level above the first threshold.

According to some examples, a power level of the activation signal is increased according to a power ramp profile.

According to some examples, the activation signal is received from a first device and the response is transmitted to a second device.

According to some examples the first device and second device are collocated.

According to some examples, the first device and second device are at different locations.

According to some examples, the first device comprises the second device.

According to some examples, the apparatus comprises a tag.

According to some examples, the apparatus comprises a passive loT device.

According to an eighteenth aspect there is provided a method comprising: receiving an activation signal; transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to some examples, the method comprises: receiving a second activation signal with an instruction to enable or disable at least one of condition i) and condition ii).

According to some examples, the method comprises: receiving a third activation signal with a request to report whether the apparatus sends the response according to condition i) and/or condition ii); sending, in response to the request, an indication that the apparatus sends a response according to at least one of condition i) and/or condition ii).

According to some examples, the method comprises: receiving a fourth activation signal with a request to change the second threshold in an operation according to condition ii); changing the second threshold according to the request.

According to some examples, the method comprises: determining that the power level of the activation has dropped from above the first power threshold level to below the first power threshold level; configuring, in response to the determination, the apparatus in a first state where the response is transmitted once in response to the activation signal being received at a third power level above the first threshold.

According to some examples, a power level of the activation signal is increased according to a power ramp profile.

According to some examples, the activation signal is received from a first device and the response is transmitted to a second device.

According to some examples the first device and second device are collocated.

According to some examples, the first device and second device are at different locations.

According to some examples, the first device comprises the second device.

According to some examples, the apparatus comprises a tag.

According to some examples, the apparatus comprises a passive loT device.

According to a nineteenth aspect there is provided a computer readable medium comprising instructions which, when executed by an apparatus, cause the apparatus to perform at least the following: receiving an activation signal; transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to a twentieth aspect there is provided a non-transitory computer readable medium comprising program instructions that, when executed by an apparatus, cause the apparatus to perform at least the following: receiving an activation signal; transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to a twenty-first aspect there is provided an apparatus comprising means for sending an activation signal to a tag, wherein the tag is configured to transmit a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to some examples, the apparatus comprises means for transmitting a second activation signal to the tag with an instruction to enable or disable at least one of condition i) and condition ii).

According to some examples, the apparatus comprises: means for transmitting a third activation signal to the tag with a request to report whether the apparatus sends the response according to condition i) and/or condition ii); means for receiving an indication that the tag sends a response according to at least one of condition i) and/or condition ii).

According to some examples, the apparatus comprises means for transmitting a fourth activation signal to the tag with a request to change the second threshold in an operation according to condition ii).

According to some examples, the apparatus comprises means for increasing a power level of the activation signal according to a power ramp profile.

According to some examples, the response is transmitted by the tag to a second device.

According to some examples the apparatus and the second device are collocated.

According to some examples, the apparatus and the second device are at different locations.

According to some examples, the apparatus comprises the second device.

According to twenty-second aspect there is provided an apparatus comprising at least one processor and at least one memory storing instructions that, when executed by the at least one processor, cause the apparatus at least to perform: sending an activation signal to a tag, wherein the tag is configured to transmit a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to some examples, the at least one processor and at least one memory storing instructions cause, when executed by the at least one processor, the apparatus at least to perform transmitting a second activation signal to the tag with an instruction to enable or disable at least one of condition i) and condition ii).

According to some examples, the at least one processor and at least one memory storing instructions cause, when executed by the at least one processor, the apparatus at least to perform transmitting a third activation signal to the tag with a request to report whether the apparatus sends the response according to condition i) and/or condition ii); means for receiving an indication that the tag sends a response according to at least one of condition i) and/or condition ii).

According to some examples, the at least one processor and at least one memory storing instructions cause, when executed by the at least one processor, the apparatus at least to perform transmitting a fourth activation signal to the tag with a request to change the second threshold in an operation according to condition ii).

According to some examples, the apparatus comprises means for increasing a power level of the activation signal according to a power ramp profile.

According to some examples, the response is transmitted by the tag to a second device.

According to some examples the apparatus and the second device are collocated.

According to some examples, the apparatus and the second device are at different locations.

According to an twenty-third aspect there is provided a method comprising sending an activation signal to a tag, wherein the tag is configured to transmit a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to some examples, the method comprises transmitting a second activation signal to the tag with an instruction to enable or disable at least one of condition i) and condition ii).

According to some examples, the method comprises transmitting a third activation signal to the tag with a request to report whether the apparatus sends the response according to condition i) and/or condition ii); means for receiving an indication that the tag sends a response according to at least one of condition i) and/or condition ii).

According to some examples, the method comprises transmitting a fourth activation signal to the tag with a request to change the second threshold in an operation according to condition ii).

According to some examples, the apparatus comprises means for increasing a power level of the activation signal according to a power ramp profile.

According to some examples, the response is transmitted by the tag to a second device.

According to some examples the apparatus and the second device are collocated.

According to some examples, the apparatus and the second device are at different locations.

According to a twenty-fourth aspect there is provided a computer readable medium comprising instructions which, when executed by an apparatus, cause the apparatus to perform at least the following: sending an activation signal to a tag, wherein the tag is configured to transmit a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

According to a twenty-fifth aspect there is provided a non-transitory computer readable medium comprising program instructions that, when executed by an apparatus, cause the apparatus to perform at least the following: sending an activation signal to a tag, wherein the tag is configured to transmit a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

### DESCRIPTION OF FIGURES

Embodiments will now be described, by way of example only, with reference to the accompanying Figures in which:
Figure 1 shows a first network topology;
Figure 2 shows a second network topology;
Figure 3A shows a third network topology for downlink assistance;
Figure 3B shows the third network topology for uplink assistance;
Figure 4 shows a fourth network topology;
Figure 5 shows an example A-loT scenario;
Figure 6 shows an example graph of received power against distance for A-loT devices;
Figure 7 shows an example A-loT scenario where A-loT devices have a first capability;
Figure 8 shows an example A-loT scenario where A-loT devices have a second capability;
Figure 9 shows an example signal flow;
Figure 10 shows an example state change diagram;
Figure 11 shows a representation of a control apparatus according to some example embodiments;
Figure 12 shows a representation of an apparatus according to some example embodiments;
Figure 13 shows a schematic representation of a non-volatile memory medium storing instructions which when executed by a processor allow a processor to perform one or more of the steps of the methods disclosed herein;
Figure 14 shows an example method flow; and
Figure 15 shows an example method flow;

### DETAILED DESCRIPTION

The present disclosure relates to loT devices, and in some examples to methods of reducing interference.

loT devices usually consume tens or hundreds of milliwatts power during transceiving, while the cost is a few dollars. However, to achieve the internet of everything, loT devices with ten or even a hundred times lower cost and power consumption are needed, especially for a large number of applications requiring batteryless devices. Regular replacement of batteries in battery powered devices is impractical due to consumption of materials and manpower. Devices that can use energy harvested from a surrounding environment are therefore useful, especially in applications with a large number of device (e.g., ID tags and sensors).

A passive radio is a device that can harness energy from wireless signals sent on specific carriers and/or bandwidths and charges a simple circuitry that, once activated, it will emit/reflect a signal which encodes at least the ID of the passive radio. In some examples described herein, passive radio (tag) transmission is referred to. It should be understood that such passive radio transmission does not necessarily mean active generation and transmission of an RF signal but in some examples could instead include modulating the reflection of an activation signal. This is discussed further below with respect to device types A, B and C. The typical system architecture around a passive radio comprises:
- An activator: a device that sends an activation signal targeted at waking up the passive radio.
- The passive radio: harnesses energy over a range of frequencies and listens for activation signals. Once such a signal is detected, the passive radio emits/reflects a signal which is specific to a radio ID of the passive radio. In some examples, other passive radios may be included in the system architecture.
- A reader: a device that listens and detects the passive radio signals. The reader may or may not be collocated with the activator.

Passive radios may comprise batteryless devices with no energy storage capability at all, and may depend on availability of an external source of energy. Semi-passive devices may have a limited energy storage capability that does not need to be replaced or recharged manually.

3GPP TR 38.848 V0.1.0 describes three ambient loT device types, A, B and C:
- Device A: No energy storage, no independent signal generation/amplification, i.e., backscattering transmission.
- Device B: Has energy storage, no independent signal generation, i.e., backscattering transmission. Use of stored energy can include amplification for reflected signals.
- Device C: Has energy storage, has independent signal generation, i.e.,active RF components for transmission.

The design targets for each device type's power consumption are as follows:
- Device A ≤ 10 µW
- Device A < Device B < Device C
- Device C ≤ 1 mW

The design targets for complexity for each device are as follows:
- Device A: Comparable to UHF RFID
- Device A ≤ Device B ≤ Device C,
- Device C: Orders-of-magnitude lower than NB-loT

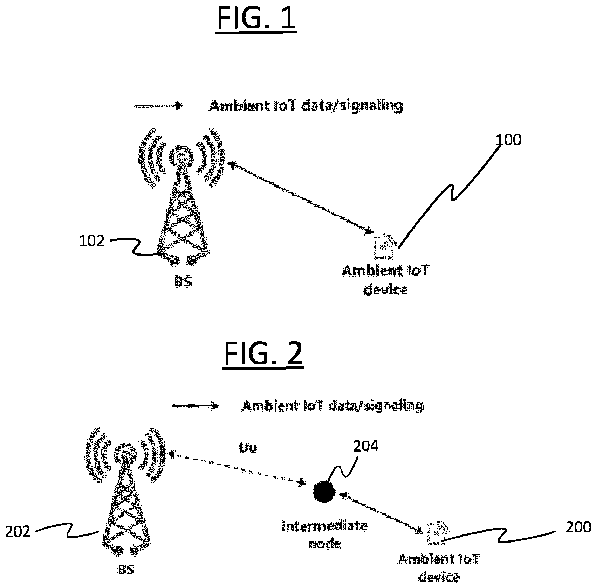

3GPP TR 38.848 describes topologies for Ambient loT networks and devices. These topologies are shown in Figures 1, 2, 3A, 3B and 4. In all of these topologies, the Ambient loT device may be provided with a carrier wave from other node(s) either inside or outside the topology. The links in each topology may be bidirectional or unidirectional. BS (Base Station), UE (User Equipment), assisting node, or intermediate node could be multiple BSs or UEs, respectively. The mixture of indoor and outdoor placement of such nodes is regarded as a network implementation choice.

Figure 1 shows a first topology with BS 102 and A-loT device 100 which communicate directly and bidirectionally. The communication between the base station and the ambient loT device includes Ambient loT data and/or signalling. This topology includes the possibility that BS 102 transmitting to A-loT 100 device is a different from BS 102 receiving from A-loT device 100.

Figure 2 shows a second topology with BS 202, an intermediate node 204 and A-loT device 200. A-loT device 200 communicates bidirectionally with an intermediate node 204 between device 200 and BS 202. In this topology, intermediate node 204 can be a relay, IAB node, UE, repeater, etc. which is capable of Ambient loT. Intermediate node 204 transfers the information between BS 202 and the A-loT device 200.

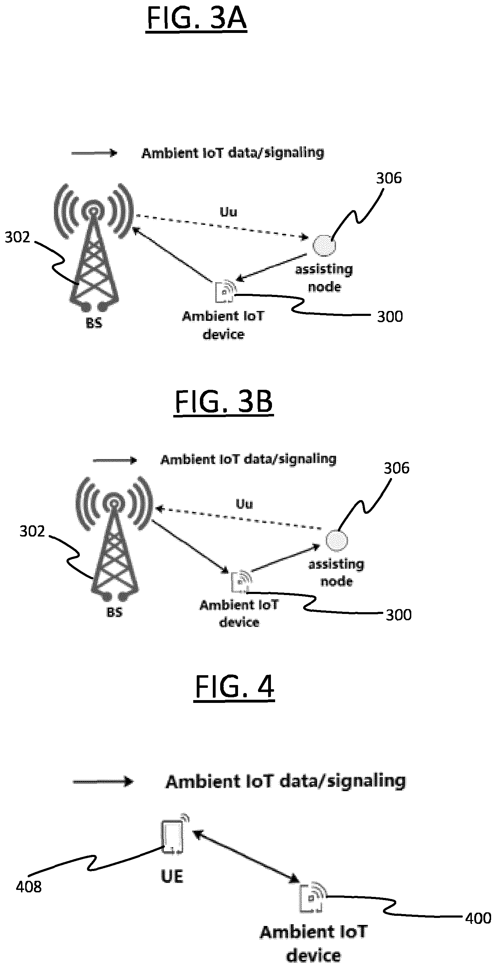

Figures 3A and 3B show a third topology. In a downlink assistance option shown in Figure 3A, A-loT device 300 transmits data/signaling to a base station 302 and receives data/signaling from an assisting node 306. In an Uplink assistance option shown in Figure 3B, the A-loT device receives data/signaling from a base station 302 and transmits data/signaling to the assisting node. In this topology, assisting node 306 can be a relay, IAB (Integrated Access and Backhaul), UE, repeater, etc. which is capable of ambient loT.

Figure 4 shows a fourth topology where A-loT device 400 communicates bidirectionally with UE 408. The communication between UE 408 and A-loT device 400 includes Ambient loT data and/or signaling.

To support and integrate A-loT in communications systems, such as 5G NR network infrastructure, a network initially discovers and identifies A-loT devices (tags). This can be particularly difficult for device types A and B, which can hear activators only in proximity. With no onboard active (i.e., with a power source) elements, device types A and B also cannot make themselves heard or visible.

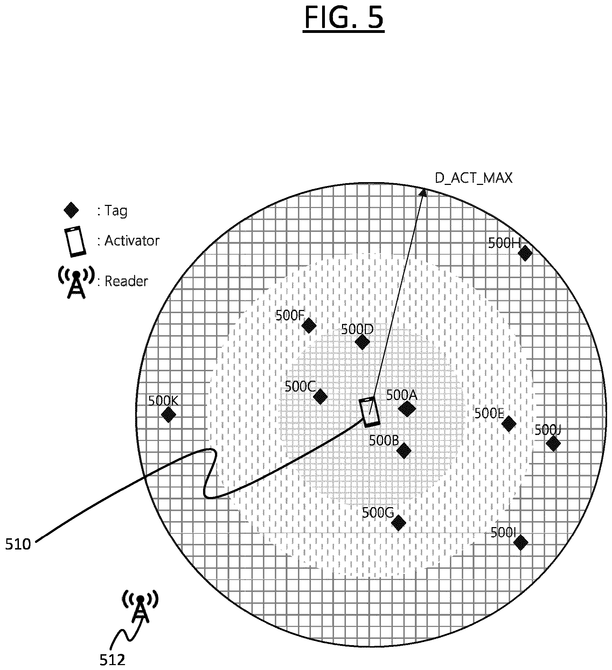

Figure 5 shows an example with tags 500A, 500B, 500C, 500D, 500E, 500F, 500G, 500H, 5001, 500J, 500K, activator 510 and reader 512. If multiple tags are located within an activator 510's maximum power range, D_ACT_MAX, each of the multiple tags will respond to the activation signal which will consequently cause high tag to tag interference at reader 512. In addition, the level of the back scattered signal from the tags will decrease as the distance from reader 512 increases, whereby tags located close to reader 512 can "deafen" tags located far from the reader 512, for a given activator 510 activation power level.

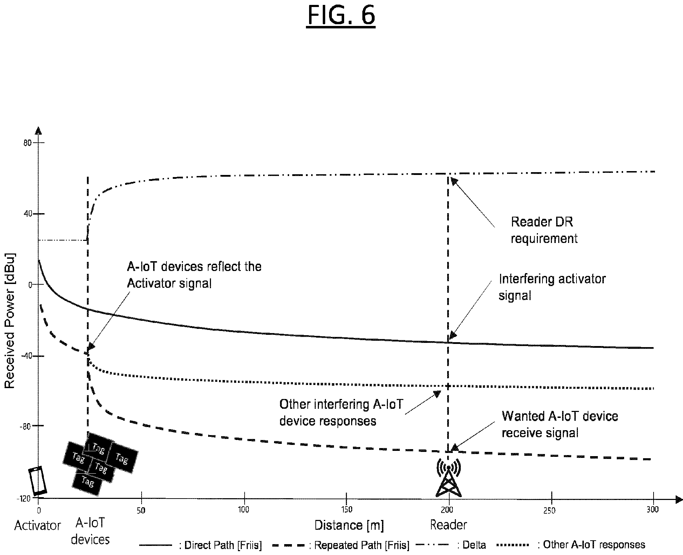

Figure 6 depicts signal levels for an example scenario with an A-loT activator located to the left at 0m, a wanted A-loT device (tag) located 24m from the activator and the reader located further away. Figure 6 shows that the activation signal at the receiver can be more than 50 dB higher than the received modulated signal from the wanted tag. As such, the receiver would have to be capable of coping with such a high interference level (SINR), which will require a complex and expensive receiver. Furthermore, if there are more tags located within activation distance these will be responding to the same activation signal and the interference level will increase significantly as indicated in Figure 6. For example, assuming 10,000 Tags in a warehouse responding to a single activation signal this will increase the interference level by 40 dB on top of the already inherent problem of direct activator interference.

A possible mitigation action is to design A-loT devices with muting capability and then addressing each individual A-loT device or smaller groups of A-loT devices by embedding IDs of respective A-loT devices in the activation signal. For large number of A-loT tags within the activation range this would increase response latency.

Examples described herein provide a solution to reduce interference that multiple A-loT devices (tags) cause onto each other when positioned within an activation range of an activator. Some examples relate to reducing this Tag-to-Tag interference without having to address each A-loT device individually while muting other A-loT devices within the activation range.

Some example methods described herein relate to reducing Tag-to-Tag interference based on activation power filtering of tag response.

As a default, a tag will respond when an activation power at the tag is higher than a minimum activation power threshold, P_act_min. According to some examples, one or more tags may have at least one further tag capability, RespOnce and/or ActMax.

According to a first tag capability, RespOnce, a tag will respond only once as long as the activation signal is ON at above the first tag power threshold, P_act_min. Once the activation signal is OFF (below (P_act_min)), the tag will re-arm for responding again at the next activation signal event. In other words, the tag will respond only when it is in a first state and an activation signal is received with power above P_act_min. When the power of the activation signal drops below P_act_min, the tag will return to the first state.

The RespOnce capability may be reported upon a request via the activation signal. The RespOnce capability may be enabled/disabled via the activation signal.

According to a second tag capability, ActMax, a tag will continue to modulate/repeat is response onto an activation signal as long as the activation signal is ON with received power at the tag above P_act_min and below a maximum activation power limit, Max_th.

The ActMax capability may be reported upon a request via the activation signal. The ActMax capability may be enabled/disabled via the activation signal. The ActMax limit (Max_th) may be re-configured and transmitted via the activation signal.

A Tag may have one, both, or neither of the capabilities RespOnce and ActMax. The RespOnce and ActMax capabilities may be enabled together (i.e. simultaneously) via an activation signal or separately via two separate activation signals.

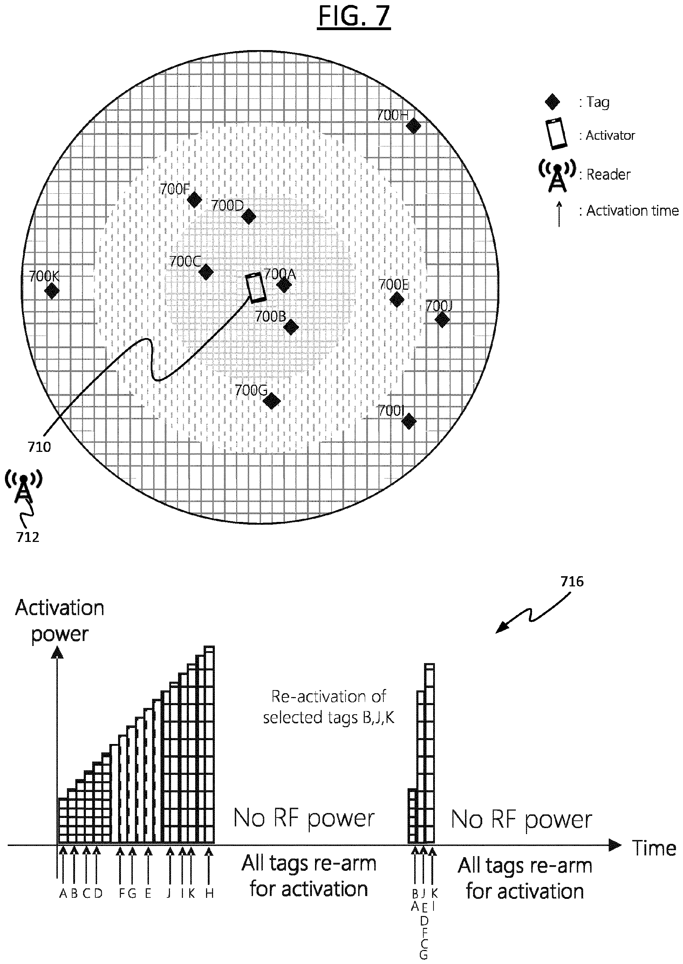

Figure 7 shows an example with 11 RespOnce enabled tags 700A-700K, located within activation coverage but with different distances to activator 710. According to embodiments, by activation signal power ramping (increasing signal power according to a profile of power against time) it is possible to separate tag responses in time and thereby mitigate the tag-to-tag interference at reader 712. By high resolution power ramping the tag responses time separation can be maximized.

For static and semi static conditions subsequent re-activation can be tag or tag sub-group specific. An example of re-activation of Tags K, J and B is depicted in Figure 7 using reduced 3 step power ramping. All tags have re-armed and will respond once when the activation power is above P_min_act. Consequently, more tags will respond as outlined in 716.

The activation power against time graph at 716 shows how response tags can respond to an activation signal power variation over time. Note that in 716, A corresponds to tag 700A, B corresponds to tag 700B, etc. At Time = 0 a first activation signal power ramp is performed (which is higher resolution than the second activation signal power ramp, as shown in the left-hand side of the graph 716). Then, no Radio Frequency power is applied to the activation signal, so all tags re-arm for activation. The same effect would be achieved if the power of the activation signal dropped below P_act_min. A second power ramp is performed with three discrete steps (as shown towards the middle of the Time axis in graph 716). Multiple tags respond at each respective power level of the 3 discrete power levels. At the first power level tags 700A and 700B respond. At the second power level tags 700G, 700C, 700F, 700D, 700E, 700J respond. At the third power level, tags 7001 and 700K respond.

To prevent high tag-to-tag interference, tags with shorter distance to activator 710 than a targeted tag may be activated first at a lower power, before ramping power to address the target tag. Repeated response latency is gated by duration of the activation signal which may include ramping through selected power levels.

In some examples, Tag-reader distance will be approximately the same for all tags no matter the activator-tag distance, which may reduce Reader dynamic range requirements. Activator-tag distance is significantly lower than tag-reader distance according to some examples.

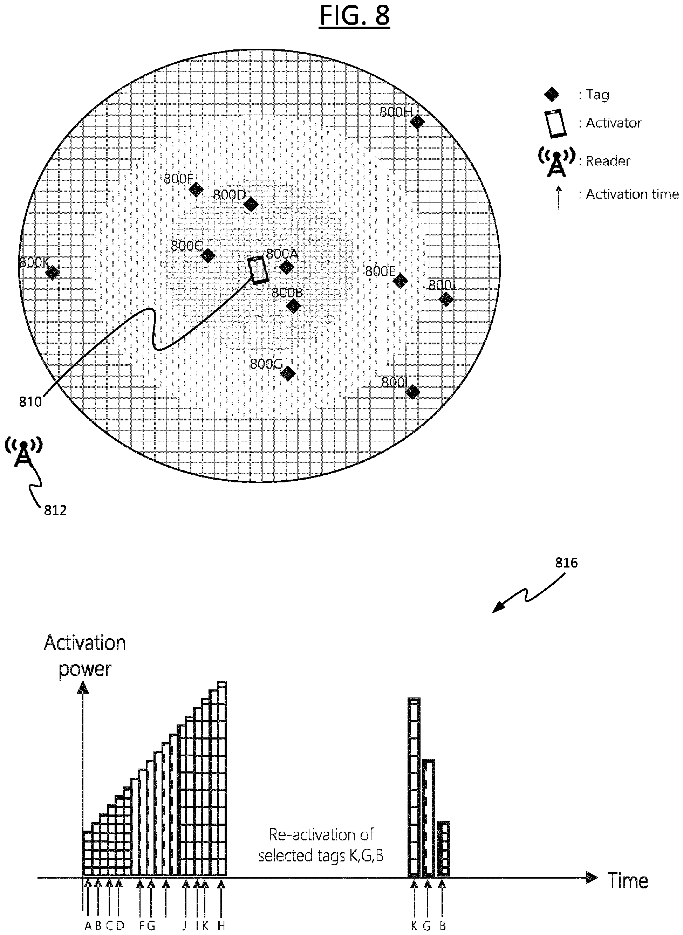

Figure 8 shows an example with 11 ActMax enabled tags 800A-800K, located within activation coverage but with different distances to activator 810. According to embodiments by activation signal power ramping it is possible to separate tag responses in time and thereby mitigate the tag-to-tag interference at reader 812. By high resolution power ramping the tag responses time separation can be maximized.

For static and semi static conditions subsequent re-activation can be Tag or Tag sub-group specific. An example of re-activation of Tags K, G and B is depicted in Figure 8 using 3 discrete power steps.

The activation power against time graph at 816 shows how response tags can respond to an activation signal power variation over time. Note that in 816, A corresponds to tag 800A, B corresponds to tag 800B, etc. At Time = 0 a first activation signal power ramp is performed (which is higher resolution than the second activation signal power ramp). Then, no Radio Frequency power is applied to the activation signal. A second power ramp is then performed with three discrete steps. A single tag responds at each of the 3 discrete power levels. At the first power level tag 800K responds. At the second power level tag 800G responds. At the third power level tag 800B responds.

To prevent high tag-to-tag interference all tags at a specific distance to activator 810 may be activated using specific Activation power while tags closer or further away from activator 810 will remain silent. Repeated response latency is gated by the duration of the activation signal which may be down to a single power level activation to address a specific tag. In this scenario, each tag activates only within its respective power window; i.e. P_act_min to Max_th. This allows activation filtering of specific tags by setting corresponding activation power levels. For example, in Fig. 8 a high enough activation power level capable of activating Tag_K, will activate this tag, and all other tags whose maximum threshold power Max_th is below the activation power applied to tag K will remain silent.

The tag activation power window may be configurable which allows for adjustment of the activation ramping profile for a given tag placement distribution, which may be scattered or clustered within the activation range.

Tag-reader distance will be approximately the same for all tags no matter the activator-tag distance which may reduce reader 812 dynamic range requirements.

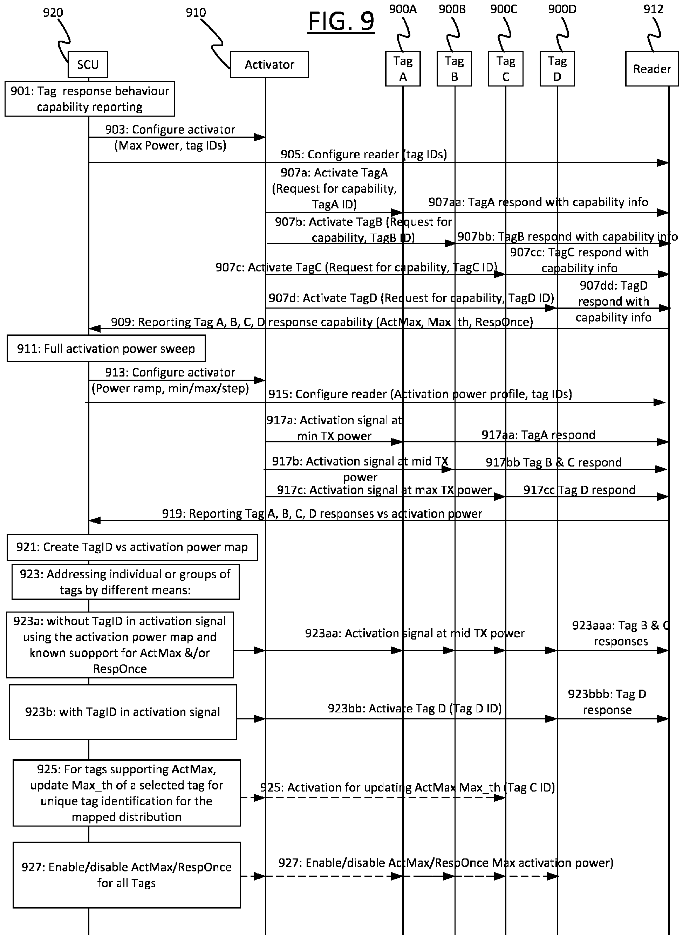

For tags with RespOnce or ActMax (shown in figures 7 and 8 respectively), if many tags are located at approximately a same distance to an activator 710/810, time shift of tag responses and/or tag response filtering by activation power level may not be possible without the use of a further scheme. Such schemes are discussed with respect to Figure 9 below.

Figure 9 shows an example signal flow between a network entity (e.g., a Session Control Unit, SCU) 920, an activator 910, tag A 900A, tag B 900B, tag C 900C, tag D 900D and reader 912. According to some examples, SCU 920 may be considered to be a network entity, activator 910 may be considered to be a first device and reader 912 may be considered to be a second device.

At 901, SCU 920 initiates a request for information about response behaviour capabilities of tags within reach of a selected activator (activator 910 in this example). 901 to 909 may be considered to form a tag capability reporting phase. This phase may be performed once for a given set of tags and repeated upon inclusion of additional tags. In an alternative example, the response behaviour capabilities of tags 900A-900D may already be known by SCU 920 (based e.g. on knowledge of known types of tags deployed in the area). In such examples, the tag capability reporting phase may be omitted.

At 903, SCU 920 configures activator 910 for tag capability reporting. The activator configuration may include, for example, IDs of each of tags 900A-900D. The activator configuration may further include a request for activation signal transmission. In some examples, it may be requested that the activation signal transmission is sent at maximum power of activator 910. The activator configuration may also include a request for repeated transmission of each Tag ID in a defined order.

At 905, SCU 910 may configure reader 912. The reader configuration may include the tag IDs of each of tag 900A-900D. The reader configuration may also include a transmitted tag ID order (the same order as defined at 903).

At 907a, 907b, 907c, 907d activator 910 transmits an activation signal to tag A 900A, tag B 900B, tag C 900C and tag D 900D respectively. This order of transmission may be defined at 903 as described above. The activation signal may be transmitted along with a request to report tag response behavior capabilities. At 907aa, 907bb, 907cc, 907dd, each of the tags responds to reader 912 with a response payload including response behavior capability information of the tag. This capability information may include information on support for ActMax, Fixed or configurable ActMax limit Max_th, and RespOnce.

When tags 900A-D respond to reader 912, they may transmit signals to reader 912. In some examples, where one or more of tags 900A-D are type A or B, this transmission is not active generation of an RF response signal independent of the activation signal but instead modulation of the tag's response onto the activation signal reflection.

At 909, reader 912 reports to SCU 920 information on support for ActMax, Fixed or configurable ActMax limit Max_th, and response for tags 900A-D.

At 911, SCU 920 initiates a full activation power ramping sweep to create a map of adequate activation power for each tag 900A-D.

At 913, SCU 920 configures activator 910 with one or more power levels for transmitting an activation signal to at least one tag (tags 900A-900D in this example). The one or more power levels may define a power level ramp of the activation signal. In some examples, the configuration of the power level ramp may comprise an activation signal power ramp profile comprising a minimum power level, a maximum power level, a step between each power level and a time duration for each power level step.

At 915, reader 912 is configured with tag IDs and the information of the configuration of activator 910's one or more power levels configured at 913. In some examples, the activation signal power ramp profile is sent at 915.

At 917a, 917b and 917c activator 910 may transmit the activation signal according to the configured one or more power levels (e.g. according to the activation signal power ramp profile). The activation signal set at 917a-c may be transmitted without Tag ID payloads. Tags 900A-D respond according to their currently configured tag capabilities when the activation power is above P_act min.

In this example, at 917aa tag A 900A responds to a low transmission power activation signal to reader 912. At 917bb, tag B 900B and tag C 900C responds to a medium transmission power activation signal to reader 912. At 917cc, tag D 900D responds to a high transmission power activation signal to reader 912. Each of the responses at 917aa, 917bb and 917cc comprise the tag ID(s) of the relevant tag(s).

At 919, reader 912 receives tag response(s) for each activation signal power level and can correlated with the tag IDs received at 905 to identify which tags respond at which activation signal power level. This is then reported to SCU 920.

At 921, SCU can create a tag ID vs. activation signal power level map based on the reporting from reader 912.

At 923, based on the tag ID vs. activation signal power level map (i.e., based on the knowledge of Tag power/Tag activator distance distribution and the knowledge of support of each tag for ActMax and/or RespOnce), SCU 920 can address individual tags or sub-group of tags.

For example, the map may show that a tag is isolated at specific activator distance (activation power) and/or that other tags are clustered at another activator distance (activation power). These individual tags or subgroups of tags may be addressed without using Tag ID's by sending the activation signal at a specific power, as shown at 923a, 923aa and 923aaa.

If too many Tags are located at similar activation distance (same activation power) then individual, or subgroup of Tags may be addressed by Tag-ID-less activation at specific activation power including a random response delay seed to mitigate the Tag-to-Tag interference at the reader. The random response delay seed (e.g., a random value) may be included in the activation signal from the activator. The activation signal may also include a contention window. Each tag may have a random generator which uses the random value and a tag identifier. Each tag can calculate a response window within the contention window based on the output of the random generator. Each device can then respond in its own transmission window. This can be used to reduce interference to below a threshold level (the process can be repeated with an increased contention window size if the interference is above the threshold level).

If many tags are located at a similar activation distance, individual tag ID activation for a particular activation distance can be used as shown at 923b, 923bb and 923bbb.

Optionally, at 925, SCU 920 may reconfigure the upper response limit Max_th for tags supporting ActMax. This reconfiguration may be based on the activation power map to optimize individual/subgroup selection using a specific activation power.

Optionally, at 927, depending on tag capabilities, all tags may be configured for the same response behaviour via an enable/disable ActMax/RespOnce activation signal. In some examples this may be sent at maximum power in order to reach all tags 900A-D, and also may be sent without a Tag ID. This option may be advantageous in cases where all tags support both ActMax & RespOnce. In such situations, if there is a need to address individual tags in isolation, the fastest way is to configure for ActMax and use appropriate activation power for each tag. If a need to address more tags then arise it may be faster to reconfigure for RespOnce and address more tags e.g. in subgroups keeping the total number of tags responding within the capability of the reader.

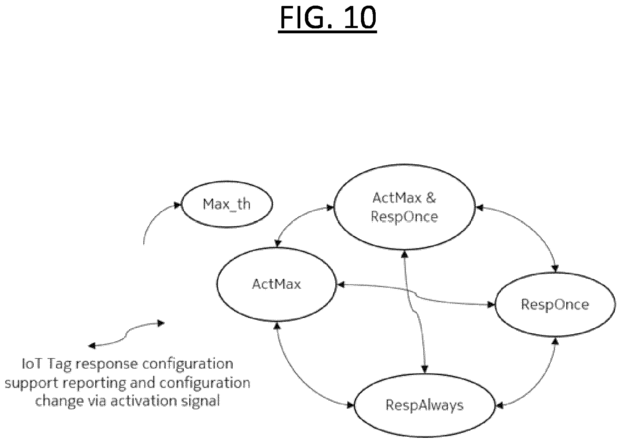

Figure 10 shows an example state change diagram for an A-loT tag supporting both ActMax and RespOnce on top of the default tag configuration, RespAlways (where a tag always responds above P_act_min). An SCU may, via the activation signal, request for reporting of all response configurations supported by the A-loT Tag an may dynamically update the active response configuration.

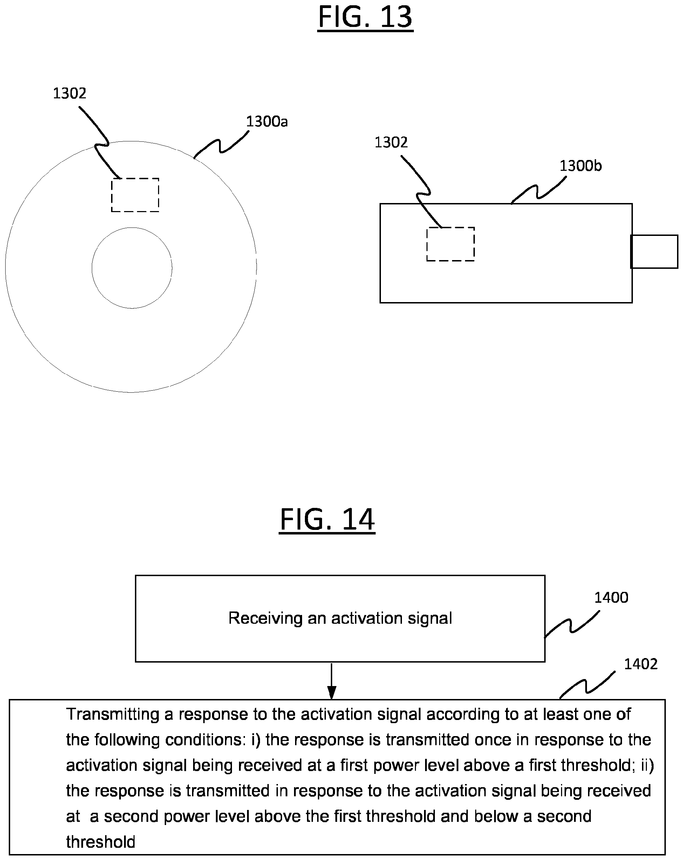

Figure 14 shows an example method flow. The method may be performed, for example, by an apparatus such as tag 900A-D.

At 1400, the method comprises receiving an activation signal.

At 1402, the method comprises transmitting a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

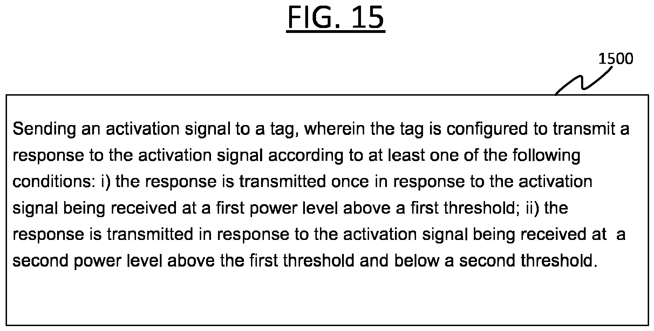

Figure 15 shows an example method flow. The method may be performed, for example, by an apparatus such as activator 910.

At 1500, the method comprises sending an activation signal to a tag, wherein the tag is configured to transmit a response to the activation signal according to at least one of the following conditions: i) the response is transmitted once in response to the activation signal being received at a first power level above a first threshold; ii) the response is transmitted in response to the activation signal being received at a second power level above the first threshold and below a second threshold.

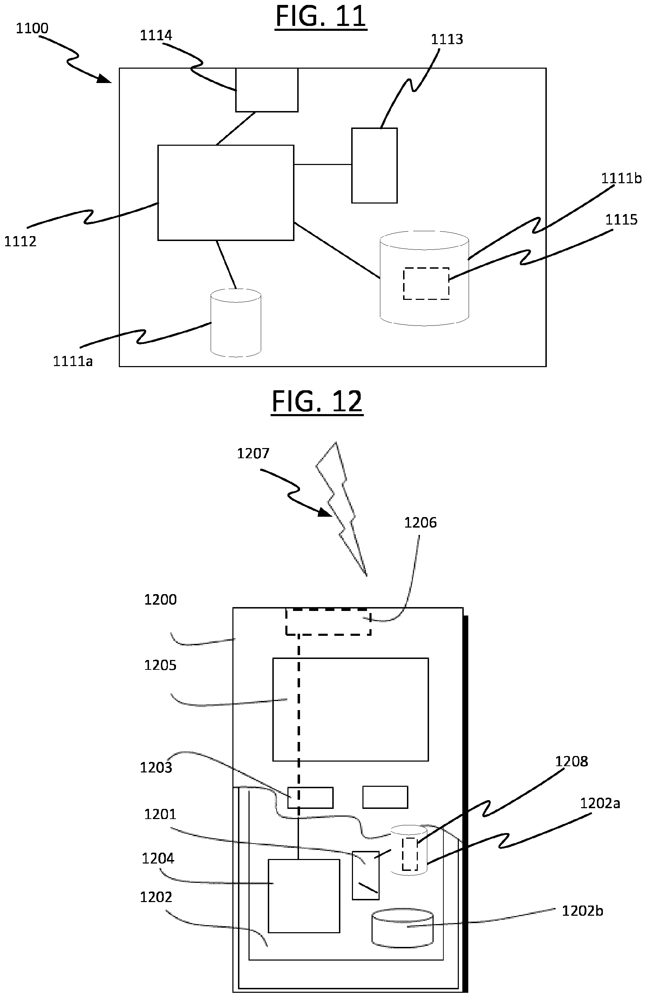

FIG. 11 illustrates an example of a control apparatus 1100 for controlling a network. The control apparatus may comprise at least one random access memory (RAM) 1111a, at least on read only memory (ROM) 1111b, at least one processor 1112, 1113 and an input/output interface 1114. The at least one processor 1112, 1113 may be coupled to the RAM 1111a and the ROM 1111b. The at least one processor 1112, 1113 may be configured to execute an appropriate software code 1115. The software code 1115 may, for example, allow the at least one processor 1112, 1113 to perform one or more steps of any method flow described herein. The software code 1115 may be stored in the ROM 1111b. The control apparatus 1100 may be interconnected with another control apparatus 1100 controlling another function of the RAN or the core network.

FIG. 12 illustrates an example of a terminal 1200, such as a UE. The terminal 1200 may be provided by any device capable of sending and receiving radio signals. In some examples, the terminal may comprise a user equipment, a mobile station (MS) or mobile device, such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 1200 may provide, for example, communication of data for carrying communications. The communications may be one or more of voice, electronic mail (email), text message, multimedia, data, machine data and so on.

The terminal 1200 may be configured to receive signals over an air or radio interface 1207 via appropriate apparatus for receiving and may transmit signals via appropriate apparatus for transmitting radio signals. In FIG. 12, transceiver apparatus is designated schematically by block 1206. The transceiver apparatus 1206 may be provided, for example, by means of a radio part and associated antenna arrangement. The antenna arrangement may be arranged internally or externally to the mobile device.

The terminal 1200 may be provided with at least one processor 1201, at least one memory ROM 1202a, at least one RAM 1202b and other possible components 1203 and 1204 for use in software and hardware aided execution of tasks it is designed to perform, including control of access to and communications with access systems and other communication devices. The at least one processor 1201 is coupled to the RAM 1202b and the ROM 1202a. The at least one processor 1201 may be configured to execute an appropriate software code 1208. The software code 1208 may for example allow to perform one or more of steps of any method flow described herein. The software code 1208 may be stored in the ROM 1202a.

The processor, storage and other relevant control apparatus can be provided on an appropriate circuit board and/or in chipsets. This example is denoted by reference 1202. The device may optionally have a user interface, such as key pad 1205, touch sensitive screen or pad, combinations thereof or the like. Optionally, one or more of a display, a speaker and a microphone may be provided depending on the type of the device.

FIG. 13 shows a schematic representation of non-volatile memory media 1300a (e.g. computer disc (CD) or digital versatile disc (DVD)) and 1300b (e.g. universal serial bus (USB) memory stick) storing instructions and/or parameters 1302 which when executed by a processor allow the processor to perform one or more of the steps of any method flow described herein.

It should be understood that the apparatuses may comprise or be coupled to other units or modules etc., such as radio parts or radio heads, used in or for transmission and/or reception. Although the apparatuses have been described, in some examples as one entity, different modules and memory may be implemented in one or more physical or logical entities.

It is noted that whilst some examples have been described in relation to 5G networks, similar techniques and/or mechanisms can be applied in relation to other networks and communication systems (e.g., 6G and beyond). Therefore, although certain examples were described above, by way of illustration with reference to certain example architectures for wireless networks, technologies and standards, other examples may be applied to any other suitable forms of communication systems than those illustrated and described herein.

It is also noted herein that while the above details various examples, there are several variations and modifications which may be made to any of the aforementioned example solutions without departing from the scope of the examples described herein.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various examples may be implemented in hardware or special purpose circuitry, software, logic or any combination thereof. Some examples detailed in the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used herein, the term "circuitry" may refer to one or more or all of the following examples:
(a) hardware-only circuit implementations (such as, implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term herein, including in any claims. As a further example, as used herein, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example performing such functionality or functionalities may be caused in an apparatus by a processor that executes instructions stored in a memory of the apparatus.

The various examples detailed in the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out one or more steps of any method flow described herein. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as DVD and the data variants thereof, CD. The physical media may be implemented as a non-transitory media.

The term "non-transitory," as used herein, is a limitation of the medium itself (e.g., tangible, not a signal) as opposed to a limitation on data storage persistency (e.g., RAM vs. ROM).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASIC), FPGA, gate level circuits and processors based on multi core processor architecture, as non-limiting examples.

Examples of the subject disclosure may be practiced in various components, such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for the various examples described herein is set out by the independent claims. The examples, if any, described herein that do not fall under the scope of the independent claims are to be interpreted as examples useful for understanding various facets of the subject disclosure.

The foregoing description has provided by way of non-limiting examples to provide a full and informative description the subject disclosure. However, various modifications and adaptations may become apparent to those skilled in the relevant arts in view of the foregoing description, when read in conjunction with the accompanying drawings and the claims. However, all such and similar modifications of the teachings of this disclosure will still fall within the scope of the examples described herein. Indeed, there is a further example comprising a combination of one or more examples with any of the other examples previously described herein.

## Claims

1. An apparatus comprising:
means for receiving an activation signal
means for transmitting a response to the activation signal according to at least one of the following conditions:
i) the response is transmitted once in response to the activation signal being received at a first power level above a first threshold;
ii) the response is transmitted in response to the activation signal being received at a second power level above the first threshold and below a second threshold.

2. An apparatus according to claim 1, wherein the apparatus comprises:
means for receiving a second activation signal with an instruction to enable or disable at least one of condition i) and condition ii).

3. An apparatus according to claim 1 or claim 2, wherein the apparatus comprises:
means for receiving a third activation signal with a request to report whether the apparatus sends the response according to condition i) and/or condition ii);
means for sending, in response to the request, an indication that the apparatus sends a response according to at least one of condition i) and/or condition ii).

4. An apparatus according to any preceding claim, wherein the apparatus comprises:
means for receiving a fourth activation signal with a request to change the second threshold in an operation according to condition ii);
means for changing the second threshold according to the request.

5. An apparatus according to any preceding claim, comprising:
means for determining that the power level of the activation has dropped from above the first power threshold level to below the first power threshold level;
means for configuring, in response to the determination, the apparatus in a first state where the response is transmitted once in response to the activation signal being received at a third power level above the first threshold.

6. An apparatus according to any preceding claim, wherein a power level of the activation signal is increased according to a power ramp profile.

7. A method comprising:
receiving an activation signal
transmitting a response to the activation signal according to at least one of the following conditions:
i) the response is transmitted once in response to the activation signal being received at a first power level above a first threshold;
ii) the response is transmitted in response to the activation signal being received at a second power level above the first threshold and below a second threshold.

8. A computer program comprising instructions stored thereon for performing at least the following:
receiving an activation signal
transmitting a response to the activation signal according to at least one of the following conditions:
i) the response is transmitted once in response to the activation signal being received at a first power level above a first threshold;
ii) the response is transmitted in response to the activation signal being received at a second power level above the first threshold and below a second threshold.

9. An apparatus comprising:
means for sending an activation signal to a tag, wherein the tag is configured to transmit a response to the activation signal according to at least one of the following conditions:
i) the response is transmitted once in response to the activation signal being received at a first power level above a first threshold;
ii) the response is transmitted in response to the activation signal being received at a second power level above the first threshold and below a second threshold.

10. An apparatus according to claim 9, wherein the apparatus comprises:
means for transmitting a second activation signal to the tag with an instruction to enable or disable at least one of condition i) and condition ii).

11. An apparatus according to claim 9 or claim 10, wherein the apparatus comprises:
means for transmitting a third activation signal to the tag with a request to report whether the apparatus sends the response according to condition i) and/or condition ii);
means for receiving an indication that the tag sends a response according to at least one of condition i) and/or condition ii).

12. An apparatus according to any of claims 9 to 11, wherein the apparatus comprises:
means for transmitting a fourth activation signal to the tag with a request to change the second threshold in an operation according to condition ii).

13. An apparatus according to any of claims 9 to 12, wherein the apparatus comprises:
means for increasing a power level of the activation signal according to a power ramp profile.

14. A method comprising:
sending an activation signal to a tag, wherein the tag transmits a response to the activation signal according to at least one of the following conditions:
i) the response is transmitted once in response to the activation signal being received at a first power level above a first threshold;
ii) the response is transmitted in response to the activation signal being received at a second power level above the first threshold and below a second threshold.

15. A computer program comprising instructions stored thereon for performing at least the following:
sending an activation signal to a tag, wherein the tag transmits a response to the activation signal according to at least one of the following conditions:
i) the response is transmitted once in response to the activation signal being received at a first power level above a first threshold;
ii) the response is transmitted in response to the activation signal being received at a second power level above the first threshold and below a second threshold.
